# NEUE EUROPÄISCHE PATENTSCHRIFT

(11) **EP 0 482 660 B2**
(45) Veröffentlichungstag und Bekanntmachung des Hinweises auf die Entscheidung über den Einspruch: **27.06.2001**
(45) Hinweis auf die Patenterteilung: 14.09.1994
(21) Anmeldenummer: 91118235.0
(22) Anmeldetag: 25.10.1991
(51) Int. Cl.: B28C 5/42

(54) **Mischergetriebeanordnung**
Mixer drive device
Dispositif d'entraînement d'un mélangeur

(30) Priorität: 26.10.1990 DE 4034139
(43) Veröffentlichungstag der Anmeldung: 29.04.1992
(73) Patentinhaber: Sauer-Danfoss (Neumünster) GmbH & Co OHG, D-24531 Neumünster (DE)
(72) Erfinder: Skirde, Eckhard, W-2356 Aukrug-Böken (DE)
(74) Vertreter: Altenburg, Udo, Dipl.-Phys.

(56) Entgegenhaltungen:
- EP-A- 0 191 674
- DE-A- 2 753 246
- DE-B- 1 198 266
- FR-A- 2 181 171
- FR-A- 2 221 029
- GB-A- 1 387 151

## Beschreibung

Die Erfindung betrifft einen Transportbetonmischen mit einer Getriebeanordnung mit einem die Antriebswelle der Betonmischtrommel über einen ein Planetengetriebe antreibenden Hydromotor.

Aus der französischen Patentschrift FR 2 181 171 ist ein Mischergetriebe bekannt, bei weichem antriebsseitig über einen schnellaufenden Hydromotor (ca. 70 ccm) über die erste Stufe eines Planetengetriebes in die zweite Stufe des Planetengetriebes eingetrieben wird. Das Hohlrad der zweiten Stufe Planetengetriebe und das Mischergetriebegehäuse bilden dabei ein Teil. Der Planetenträger der zweiten Stufe bildet gleichzeitig die Verbindung zu einem Abtriebsflansch. Insgesamt hat dieses bekannte Mischergetriebe eine Übersetzung von l = ca. 100. Damit ergibt sich auf der Abtriebsseite ein erforderliches Hydromotormoment von 7000 ccm/U x Druckdifferenz Abgesehen davon daß diese bekannte Anordnung technisch recht aufwendig ist, besteht ein erheblicher Nachteil hinsichtlich der Geräuschemission während des Betriebes.

In der eidesstattlichen Versicherung von Hern Schweizer, welcher bei der Faliebherr- Mischtechnik GmbH beschäftigt ist, von 13.1.2000 ist ein geräuschreduzierter Antrieb einer Mischtrommel, bestehend aus einem laugsamlaufenden und ein hohes Drehmoment abgebenden Radialkolbenmotor, einem einstufigen Planetengetriebe und einer Bogenzahnkupplung beschrieben, wobei über eine Kupplungsmuffe und einen Zwischenflansch der Radialkolbenmotor montiert ist. Gemäß der eidesstattlichen Versicherung wurde des Antrieb auf der "bauma 89" in München von 10.-16.4. 1989 ausgestellt.

Demzufolge besteht die Aufgabe der Erfindung darin, einen Transportbetonmischer mit einer Getriebeanordnung zu Schaffen bei welchem eine wesentliche Geräuschreduzierung im Betrieb und ein kompakter Aufbau der Getriebeanordnung realisiert sind.

Diese Aufgabe wird erfindungsgemäß durch die Merkmale des Anspruchs 1 gelöst. Zweckmäßige Weiterbildungen sind in den Unteransprüchen festgelegt

Danach ist der Hydromotor ein im Mischergetriebegehäuse abtriebsseitig nicht gelagerter, langsam laufender und ein hohes Drehmoment abgebender Radialkolbenmotor, dessen interne Kräfte mittels einer Zentrierbuchse über ein Lager in einen Zwischenflansch einleitbar sind, so daß das Getriebe ein einstufiges Planetengetriebe ist und daß die Getriebewelle direkt mit einem Sonnenrad gekoppelt ist, dessen Abtrieb über einen Planetenträger auf eine Bogenzahnkupplung erfolgt, welches das Drehmoment an die Antriebswelle der Mischertrommel überträgt.

Mit dem Erfindungskonzept ist es nunmehr möglich, auf die Erststufe des bekannten Mischergetriebes vollständig zu verzichten, mit einer Obersetzung von ca. 7:1 in der einzigen vorgesehenen Getriebestufe und ebenso 7000 ccm x Druckdifferenz - Abtriebsmoment zu erzielen. Inbesondere ist es möglich, da nur die internen Kräfte des Hydromotors beispielsweise durch Axiallager in den Zwischenflansch eingeleitet werden, um ein sehr kompaktes Getriebe zu schaffen.

Das erfindungsgemäße Mischergetriebe besteht aus dem einstufigen Planetengetriebe, dessen Antrieb durch ein Sonnenrad erfolgt. Der Antrieb erfolgt über den Planetenträger und eine Bogenzahnkupplung, welcher einen Flansch sowie die Lagerung der Mischertrommel beinhaltet. Demzufolge ist es möglich, den Radialkolbenmotor auf der Abtriebsseite überhaupt nicht zu lagem, wobei lediglich seine internen Kräfte abgestützt werden. Die Getriebewelle ist direkt mit dem Sonnenrad des Planetengetriebes gekoppelt, wobei die Getriebewelle auch mit der Sonnenradverzahnung einstü kig ausgebildet sein kann.

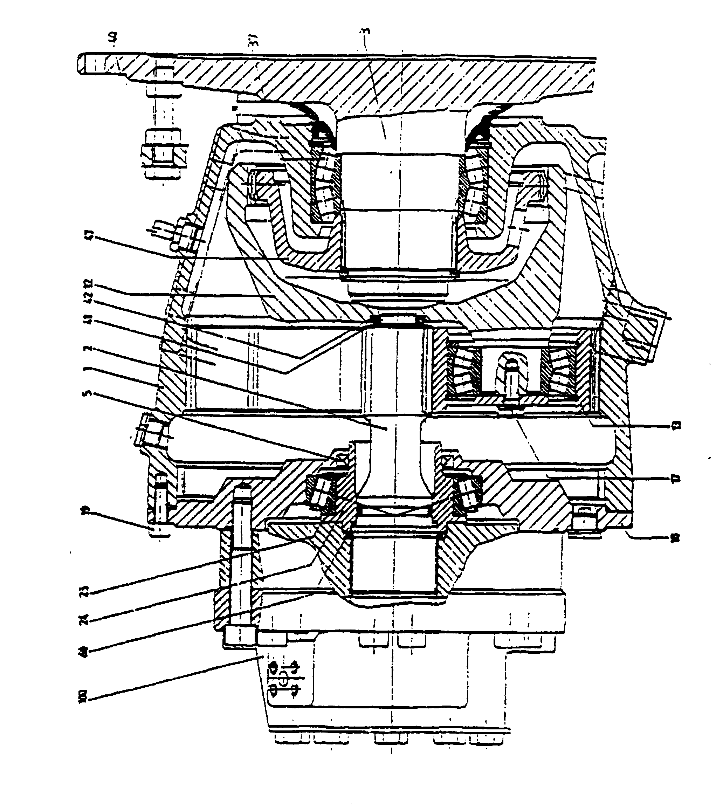

Weitere Vorteile ergeben sich aus der nachfolgenden Erläuterung der Erfindung an einem Ausführüngsbeispiel anhand der beigefügten Zeichnung, in welcher eine Schnittansicht der Getriebeanordnung mit angeschlossenem Radialkolbenmotor und der Antrieb für die Mischertrommel gezeigt sind.

Wie in der Zeichnung gezeigt ist, ist ein Radialkolbenmotor 100 mit Hilfe von Gewindestiften an einen Zwischenflansch angeschlossen. Dabei ist eine Sonnenradwelle mittels einer Zentrierbuchse 24 und einem Kegelradlager 23 auf der Abtriebsseite des Radlalkolbenmotors drehbar gelagert. Dieser Zwischenflansch 18 ist seinerseits fest mit dem Mischergetriebegehäuse 1 verbunden. Radiale Kräfte, die auf das im Radialkolbenmotor 100 befindliche Wellenende einwirken konnten, treten bei dieser Ausbildung nicht auf.

An der Sonnenradwelle 2 befinden sich ein O-Ring, an der linken Seite der Zentrierbuchse 24 befindet sich eine Ölabdichtung; auch der Zwischenflansch 18 ist über eine Wellendichtung 5 mit der Zentrierbuchse 24 verbunden.

In dem gezeigten Ansführungsbeispiel weist die Sonnenradwelle 2 ein mit ihr einstöckig ausgebildetes Sonnenrad auf, welches mit Planetenrädern 13 kämmt, wobei jedes Planetenrad 13 kraftschlüssig mit einem Planetenträger 12 verbunden ist. Dieser Planetenträger steht mit seinem freien Ende in Eingriff mit einer Bogenzahnkupplung, die im Ausführungsbeispiel ein Balligzahn-Stimrad 47 umfaßt Dieses auf einer Antriebswelle 3 sitzende Stirnrad 47 übertragt nunmehr das Drehmoment auf diese Welle 3. Um die im Betrieb des Mischers auftretenden Kräfte ausgleichen zu können, ist die in einen Abtriebsflansch 40 übergehende Welle 3 im Mischergetriebegehäuse 1 mittels eines Pendelrollenlagers gelagert. Dies ist als solches bekannt und braucht nicht näher erläutert zu werden.

Erfindungswesentlich ist die Art der Kombination des beschriebenen Radialkolbenmotors mit dem Mischergetriebeteil. Für einen separaten Betrieb eines oder beider Teile dieser Kombination sind gegenüber zusätzliche wesentliche Bauteile erforderlich.

Mit der beschriebenen Anordnung ist im Betrieb des Mischerfahrzeuges ein wesentlich im Verhältnis zum Stand der Technik reduzierter Geräuschpegel erreichbar, und zwar auf der Basis, daß ein Langsamläufer vorgesehen ist und seine Anbindung an das Getriebe direkt mit der Getriebewelle 2 über eine Nabenverzahnung folgt, Erfindungsgemäß wird ein Ausgleichsmechanismus einmal zwischen dem sehr genau zu führenden Rotationszylinder und andererseits der Getriebestufe hergestellt. Da diese Teile, insbesondere der Rotationszylinder einen sehr genauen Planlauf benötigt, wird im Bereich des Pianetengetriebes mit relativ Spiel gearbeitet; durch die besondere Lagerung werden aber aus dem Getriebe keine Relativbewegungen auf die Sonnenradwelle 2 aufgebracht, weil die Funktionsgruppen "Hydromotor" in ihrer Funktionssicherheit sonst nachteilig beeinflußt wird. Demzufolge werden die Innenkräfte des Hydromotors über ein separates Lager aufgenommen, wobei als Übermittler dieser Funktion auch die Zentrierbuchse 24 dient. Somit wird der Rotationszylinder zentriert und die Axialkraftanlage erfolgt auch an dieser Stelle. Das Lager 23 bewerkstelligt einmal die Innenkräfte des Radialkolbenmotors, das sind die in der Zeichnung nach rechts wirkenden, eindeutig bestimmbaren Innenkräfte und darüber hinaus auch die Zentrierung der Rotationsgruppe.

Die Gruppe "Hydromotor" ist vom Ölkreislauf her gegenüber dem Getriebe abgedichtet (über den O-Ring 60 und auch über die Wellendichtung 5). Getriebeseitig wird das von dem Langsamläufer gelieferte Drehmoment im Verhältnis der Übersetzung auf die Abtriebsseite des Getriebes übertragen. Die Geräuschreduzierung im Betrieb des Betonmischers ergibt sich im Prinzip durch die besondere Auswahl des Hydromotors als Langsamläufer und durch die Tatsache, daß eine relativ schnell laufende Getriebestufe entfällt, die aufgrund der hohen Zahneingriffsfrequenz wesentlich zur Geräuschemission beiträgt. Die vorgesehene Getriebestufe läuft demzufolge erheblich langsamer, so daß die Geräuschemission praktisch entfällt. Hierzu tragen auch die oben erläuterten Bauteile bei, nämlich der Zwischenflansch 18, die Zentrierbuchse 24 und die Welle 2.

Durch den Zwischenflansch 18 findet eine Zentrierung der beiden Gehäuse (Mischergetriebegehäuse 1, Gehäuse des Radialkolbenmotors 100) statt.

Am-freien Ende der Sonnenradwelle 2 ist ein Axiallager 41 vorgesehen.

## Patentansprüche

1. Transportbetonmischer mit einer Getriebeanordnung mit einem die Antriebswelle (3) der Betonmischertrommel über ein Planetengetriebe antreibenden Hydromotor, wobei der Abtrieb von der Getriebeanordnung über einen Planetenträger (12) erfolgt, von dem das Drehmoment an eine Antriebswelle (3) der Mischertrommel übertragen wird, wobei
- der Hydromotor ein im Mischergetriebegehäuse (1) abtriebsseitig nicht gelagerter, langsam laufender und ein hohes Drehmoment abgebender Radialkolbenmotor (100) ist;
- die inneren Kräfte des Radialkolbenmotors (100) mittels einer Zentrierbuchse (24) über ein Lager (23) in einen Zwischenflansch (18) einleitbar sind, der sich zwischen dem Radialkolbenmotor (100) und dem Mischergetriebegehäuse (1) befindet;
- das Planetengetriebe ein einstufiges Planetengetriebe ist;
- die den Radialkolbenmotor (100) und das Planetengetriebe verbindende Getriebewelle (2) direkt mit einem Sonnenrad gekoppelt ist; und
- der Abtrieb über den Planetenträger (12) auf eine Bogenzahnkupplung (47) erfolgt, die das Drehmoment an die Antriebswelle (3) der Mischertrömmel überträgt.

2. Transportbetonmischer mit Getriebeanordnung nach Anspruch 1, dadurch gekennzeichnet, daß das Lager ein Kegelrollenlager (23) ist.

3. Transportbetonmischer mit Getriebeanordnung nach Anspruch 1, dadurch gekennzeichnet, daß das Lager für die Getriebewelle ein Axiallager ist.

4. Transportbetonmischer mit Getriebeanordnung nach Anspruch 1, dadurch gekennzeichnet, daß die Getriebewelle (2) einteilig und mit einer Sonnenverzahnung versehen ist.

5. Transportbetonmischer mit Getriebeanordnung nach Anspruch 1, dadurch gekennzeichnet, daß der Radialkolbenmotor (100) an dem Mischergetriebegehäuse (1) stirnseitig angeflanscht ist

## Claims

1. A transportation concrete mixer with a drive arrangement with a hydraulic motor for driving the drive shaft (3) of the concrete mixer drum by way of a planetary transmission, wherein the drive output from the drive arrangement is by way of planet carrier (12) by which the torque is transmitted to a drive shaft (3) of the mixer drum, wherein
- the hydraulic motor is a low-speed radial piston motor (100) which outputs a high torque and which is not supported in the mixer transmission housing (1) at the drive output side;
- the internal forces of the radial piston motor (100) can be transmitted to an intermediate flange (18) by way of a centering bush (24) via a bearing (23), the flunge (18) being arranged between the radial piston motor (100) and the mixer transmission housing (1);
- the planetary transmission is a single stage planetary transmission;
- the transmission shaft (2) connecting the radial piston motor (100) and the planetary transmission is directly coupled to a sun wheel; and
- the drive output by way of the planet carrier (12) is to a spiral-tooth coupling (47) which transmits the torque to the drive shaft (3) of the mixer drum.

2. A transportation concrete mixer with drive arrangement according to claim 1 characterised in that the bearing is a taper roller bearing (23).

3. A transportation concrete mixer with drive arrangement according to claim 1 characterized in that the bearing for the transmission shaft is a thrust bearing.

4. A transportation concrete mixer with drive arrangement according to claim 1 characterized in that the transmission shaft (2) is in one piece and is provided with a sun tooth arrangement.

5. A transportation concrete mixer with drive arrangement according to claim 1 characterized in that the radial piston motor (100) is flange-mounted to the mixer transmission housing (1) at the end.

## Revendications

1. Bétonnière transporteuse avec un dispositif d'entraînement comprenant un hydromoteur entraînant l'arbre de transmission (3) d'un tambour mélangeur à béton par un engrenage planétaire, la sortie du dispositif d'entraînement se faisant par une cage de transmission planétaire (12) dont le couple est transmis à un arbre de transmission (3) du tambour mélangeur, où :
- l'hydromoteur est un moteur à pistons radiaux (100) à faible vitesse qui n'est pas logé du côté de sortie du boîtier d'engrenage du mélangeur (1) et qui procure un couple élevé ;
- on peut introduire les forces intérieures du moteur à pistons radiaux (100) au moyen d'une douille de centrage (22) par un coussinet (23) dans un flasque intermédiaire (18), situé entre le moteur à pistons radiaux (100) et le boîtier d'engrenage du mélangeur (1) ;
- l'engrenage planétaire est un engrenage planétaire à un étage ;
- l'arbre d'engrenage (2) qui relie le moteur à pistons radiaux (100) et l'engrenage planétaire est directement couplé à la roue solaire ; et
- la sortie passe par la cage de transmission planétaire (12) sur un coupleur à engrenage hélicoïdal (47) transmettant le couple à l'arbre de transmission (3) du tambour mélangeur.

2. Bétonnière transporteuse avec un dispositif d'entraînement selon la revendication 1, caractérisée en ce que le coussinet est un roulement à rouleaux coniques (23).

3. Bétonnière transporteuse avec un dispositif d'entraînement selon la revendication 1, caractérisée en ce que le coussinet pour l'arbre d'engrenage est un palier de butée.

4. Bétonnière transporteuse avec un dispositif d'entraînement selon la revendication 1, caractérisée en ce que l'arbre d'engrenage (2) est d'une seule pièce et pourvu d'un engrenage solaire.

5. Bétonnière transporteuse avec un dispositif d'entraînement selon la revendication 1, caractérisée en ce que le moteur à pistons radiaux (100) est relié du côté frontal au boîtier d'engrenage du mélangeur (1).
